# EUROPÄISCHE PATENTSCHRIFT

(11) **EP 4 226 063 B1**
(45) Veröffentlichungstag und Bekanntmachung des Hinweises auf die Patenterteilung: **24.07.2024**
(21) Anmeldenummer: 21786460.2
(22) Anmeldetag: 01.10.2021
(51) Int. Cl.: F16D 59/02

(54) **ELEKTROMAGNETISCHE FEDERDRUCKBREMSE UND HERSTELLVERFAHREN**
ELECTROMAGNETIC SPRIG BRAKE AND ITS MANUFACTURING PROCESS
FREIN ÉLECTROMAGNÉTIQUE ET SON PROCÉDÉ DE FABRICATION

(30) Priorität: 05.10.2020 DE 102020006060
(43) Veröffentlichungstag der Anmeldung: 16.08.2023
(73) Patentinhaber: Chr. Mayr GmbH + Co. KG, 87665 Mauerstetten (DE)
(72) Erfinder: HECHT, Martin, 87600 Kaufbeuren (DE)
(74) Vertreter: Schröer, Gernot H.
(86) Internationale Anmeldenummer: PCT/EP2021/077143
(87) Internationale Veröffentlichungsnummer: WO 2022/073881

(56) Entgegenhaltungen:
- EP-A1- 2 006 563
- EP-A1- 3 042 815
- EP-A2- 0 905 402
- WO-A1-2019/007932
- US-A1- 2019 170 201
- US-B1- 6 211 590

## Beschreibung

Die vorliegende Erfindung betrifft eine elektromagnetische Bremse, insbesondere eine elektromagnetische Federdruckbremse in bevorzugt runder Bauweise, bestehend unter anderem aus einem Spulenträger mit mindestens einem kraftausübenden Element, beispielsweise mindestens einer Druckfeder, mindestens einer Magnetspule, mindestens einer Ankerscheibe, mindestens einem in bevorzugter Ausführungsform auf beiden Planflächen mit Reibbelägen bestückten Bremsrotor und einer Gegenreibfläche sowie ein Herstellverfahren für diese Elektromagnetische Federdruckbremse, die im Folgenden meist nur noch als Federdruckbremse bezeichnet wird.

Die erfindungsgemäße Federdruckbremse zeichnet sich durch eine leistungs- und lebensdaueroptimierte Bauweise aus und wird unter Verwendung eines speziellen kostengünstigen Herstellverfahrens bereitgestellt, durch das die Leistungsdichte der Federdruckbremse weiter gesteigert wird.

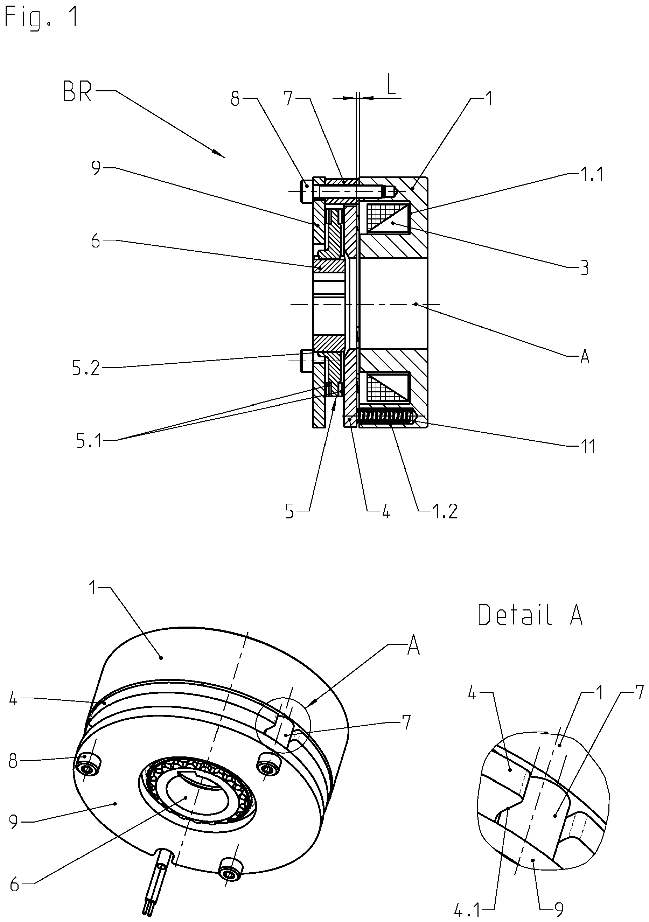

Aus dem Stand der Technik sind elektromagnetische Federdruckbremsen bekannt, bei denen der Spulenträger über Distanzbuchsen mit einer Gegenreibfläche in Form einer Flanschplatte verschraubt wird. Eine solche Federdruckbremse ist in **Fig. 1** dargestellt. Die Distanzbuchsen dienen dabei neben der Verbindung des Spulenträgers mit der Flanschplatte als Drehfixierung für die axial bewegliche Ankerscheibe und der mindestens eine Bremsrotor ist radial innerhalb der Distanzbuchsen platziert, wodurch dessen Außendurchmesser und damit der wirksame Reibradius limitiert ist. Auch die mögliche Verschleißreserve der Reibbeläge, die vom konstruktiv möglichen Reibbelagvolumen abhängt, ist dadurch begrenzt, was sich negativ auf die Lebensdauer der Federdruckbremse auswirkt.

Der sogenannte Luftspalt der Federdruckbremse, der sich bei geschlossener Bremse zwischen Spulenträger und Ankerscheibe einstellt, wird bei derartigen Konstruktionen durch die Dimensionen der Bauteile definiert und unterliegt dadurch entsprechend großen Toleranzen, die sich aus der Summe der Toleranzen mehrerer Bauteile ergeben. Dadurch muss zur Sicherstellung eines definierten Mindestluftspaltes ein Luftspalt mit einem großen Nennmaß bereitgestellt werden, der die Kraft des aus Ankerscheibe und Spulenträger bestehenden Magnetkreises des Elektromagneten begrenzt. Damit sind auch die möglichen Kräfte der verwendeten Druckfedern und folglich das von der Federdruckbremse erzeugbare Bremsdrehmoment limitiert. Bei vorgegebenem Bauraum für eine Federdruckbremse, deren Aufbau dem vorgestellten Stand der Technik entspricht, können somit deren erzielbares Bremsdrehmoment und die Verschleißreserve nicht weiter gesteigert werden.

Aus dem Stand der Technik sind Maßnahmen bekannt, um den möglichen Reibradius des Bremsrotors zu erhöhen, wie sie aus der WO2019007931A1 oder WO2019007932 A1 zu entnehmen sind. Dabei wird vorgeschlagen, anstelle separater Distanzbuchsen einteilig an den Spulenträger angeformte Distanzelemente zu verwenden, die auch zur Drehfixierung der Ankerscheiben dienen und deren Durchgangsbohrungen für die Befestigungsschrauben radial nach innen zum Spulenraum für die Magnetspule hin offen sind. Dadurch kann der Reibradius des Bremsrotors geringfügig gesteigert werden, wodurch sich auch das erzielbare Drehmoment und die vom Reibbelagvolumen abhängige Lebensdauer der Federdruckbremse geringfügig erhöhen. Der Einfluss der Bauteiltoleranzen bleibt jedoch bestehen und es muss ein großer Luftspalt mit allen damit verbundenen Nachteilen vorgesehen werden.

Zur weiteren Steigerung der Leistungsdichte schlägt die DE102016103176A1 eine spezielle Bauweise und ein Herstellverfahren für eine vorzugsweise runde elektromagnetische Federdruckbremse vor. Durch die Bauweise kann der Reibradius des Bremsrotors weiter gesteigert werden und durch die vorgeschlagene Verfahren zur Verbindung zwischen Spulenträger und Flanschplatte über ein bevorzugt rohrförmiges Verbindungselement kann ein optimierter kleiner Luftspalt erzielt werden. Bei der beschriebenen Federdruckbremse findet allerdings eine funktionale Trennung zwischen der Verbindung von Spulenträger und Anker sowie der Drehfixierung der Ankerscheibe statt. Für die Drehfixierung der Ankerscheibe sind separate Elemente in Form zylindrischer Bolzen vorgesehen, die in Bohrungen des Spulenträgeres eingebracht sind. Dadurch erhöht sich der Fertigungsaufwand und es verringert sich die Polfläche des Spulenträgers, die zur Montage von Federelementen und / oder zur Steigerung der Kraft des Elektromagneten zur Verfügung steht. Somit sind der erzielbaren Leistungsdichte auch bei dieser Federdruckbremse Grenzen gesetzt.

Aufgabe der vorliegenden Erfindung ist es demnach, eine kostengünstig herstellbare, vorzugsweise runde elektromagnetische Federdruckbremse mit optimierter Leistungsdichte und hoher Lebensdauer bereitzustellen, bei der durch konstruktive Maßnahmen der Reibradius des mindestens einen Bremsrotors ein Maximum erreicht, bei der die Polfläche des aus Spulenträger und Magnetspule gebildeten Elektromagneten frei von zusätzlichen Führungselementen für die Ankerscheibe ist und bei der vorhandene Bauteiltoleranzen durch ein spezielles Herstellverfahren eliminiert werden, wodurch ein exakter sehr kleiner Luftspalt zwischen Elektromagnet und Ankerscheibe erzielbar ist. Im Gegenzug können Dickentoleranzen an Bauteilen wie der Ankerscheibe oder dem Bremsrotor erweitert werden, was weitere Kostensenkungen ermöglicht. Diese Aufgabe wird mit den Merkmalen der unabhängigen Patentansprüche der Erfindung gelöst.

Bei der erfindungsgemäßen Federdruckbremse wird vorgeschlagen, die Distanzbuchsen durch Distanzleisten mit geringer radialer Erstreckung zu ersetzen, die einteilig mit dem Spulenträger hergestellt sind oder die alternativ fest mit dem Spulenträger verbunden sein können, beispielsweise durch Schweißen, Kleben, Verschrauben, Nieten, Bördeln oder ein vergleichbares Verbindungsverfahren. Dabei übernehmen die Distanzleisten, die zumindest in einem Teilbereich ihrer Längserstreckung einen rechteckigen oder annähernd rechteckigen Querschnitt aufweisen, die Funktion einer Führung der Ankerscheibe, die dadurch drehfixiert und in Axialrichtung beweglich ist.

Zur Befestigung der Federdruckbremse an der Peripherie, beispielsweise einer Maschinenwand, verfügt der Spulenträger über entsprechende Anschraubgewinde oder vergleichbare Verbindungsmöglichkeiten. Alternativ kann auch die Flanschplatte auf der dem Spulenträger gegenüberliegenden Seite mit entsprechenden Verbindungsmöglichkeiten wie beispielsweise Innengewinden oder Gewindebolzen versehen sein. Radial innerhalb der mindestens drei Distanzleisten befindet sich zwischen der Ankerscheibe und der Flanschplatte der Bremsrotor, der somit einen großen Reibradius aufweisen kann, was zur hohen Leistungsdichte und zur großen Verschleißreserve der Federdruckbremse beiträgt.

Hierbei kann die erfindungsgemäße Federdruckbremse mit nur einem Bremsrotor bestückt sein, wodurch sie über einen Spulenträger, eine Ankerscheibe, einen beiderseits mit Reibbelägen bestückten Bremsrotor und über eine Flanschplatte in der genannten Reihenfolge der Bauteile verfügt.

Zur Vervielfachung der erzielbaren Drehmomente kann die Federdruckbremse auch mit mehreren Bremsrotoren bestückt sein, wobei beispielsweise eine Doppelrotorbremse in der genannten Reihenfolge der Bauteile über einen Spulenträger, eine Ankerscheibe, einen ersten Bremsrotor, eine durch die Distanzleisten drehfixierte und axial bewegliche Zwischenplatte, einen zweiten Bremsrotor und abschließend über eine Flanschplatte verfügt.

Für eine weitere Steigerung der Leistungsdichte wird erfindungsgemäß vorgeschlagen, bei der Montage der Federdruckbremse ein spezielles Herstellverfahren anzuwenden, durch das die Fertigungstoleranzen der Bauteile eliminiert werden, die zu Schwankungen des Luftspaltes führen. Dazu sind die Distanzleisten und die Flanschplatte so aufeinander abgestimmt, dass die Flanschplatte mit ihrem Außenumfang oder mit ihren Flanschplatten-Nuten radial innerhalb des Zentrierbereiches der Distanzleisten liegt und in axialer Richtung einen entsprechenden Bewegungsspielraum hat.

Bei dem Herstellverfahren ist vorgesehen, den mit Druckfedern bestückten Spulenträger mit der den Distanzleisten gegenüberliegenden Planfläche auf eine Vorrichtungsplatte zu legen und die Bauteile Ankerscheibe, Bremsrotor und Flanschplatte in der genannten Reihenfolge in den radial zwischen den Distanzleisten vorhandenen Raum einzulegen. Anschließend wird mit einem oder mehreren Pressenstempeln die Flanschplatte soweit in Richtung einer ersten Hubbewegung gegen den Spulenträger gedrückt, bis alle genannten Bauteile direkt aufeinanderliegen. Danach wird der eine oder die mehreren Pressenstempel weggesteuert um eine dem gewünschten Luftspalt der Federdruckbremse entsprechende Strecke in Richtung einer zweiten Hubbewegung bewegt. Abschließend wird zwischen den der Flanschplatte zugewandten Enden der Distanzleisten und der Flanschplatte eine feste Verbindung hergestellt, beispielsweise durch ein Schweiß-, Löt- oder Klebeverfahren, vorzugsweise ein Laserschweißverfahren. Dabei kann der Schweißlaser durch einen Roboter entlang des gewünschten Nahtverlaufes geführt werden. Alternativ kann auch die Federdruckbremse mit dem zu verbindenden Bereich auf einer um die Rotationsachse rotierenden Vorrichtungsplatte an einem Schweißlaser entlanggeführt werden. Danach kann die Federdruckbremse mit dem so entstandenen Luftspalt von der Vorrichtungsplatte abgenommen und als einbaufertige Einheit an den Kunden ausgeliefert werden.

Wenn das beschriebene Herstellverfahren mit mehreren über den Umfang der Federdruckbremse verteilten Pressenstempeln durchgeführt wird, von denen jeder für sich eine weggesteuerte Bewegung vollführt, können in vorteilhafter Weise über den Umfang verteilte unterschiedliche Bauhöhentoleranzen des Spulenträgers und/oder der Ankerscheibe und/oder der Flanschplatte ausgeglichen werden.

Bei einem alternativen Herstellverfahren, das mit nur einem oder auch mit mehreren Pressenstempeln durchführbar ist, wird zunächst der mit Druckfedern bestückte Spulenträger auf die Vorrichtungsplatte gelegt. Anschließend werden über den Umfang verteilt mindestens zwei Distanzfolien auf die Polfläche des Spulenträgers aufgebracht und dann die Ankerscheibe, der Bremsrotor und die Flanschplatte in der genannten Reihenfolge platziert. Die Dicke der verwendeten Distanzfolien entspricht hierbei dem gewünschten späteren Luftspalt der Federdruckbremse. Anschließend drückt der mindestens eine Pressenstempel die Flanschplatte in Richtung der ersten Hubbewegung, bis alle genannten Teile einschließlich der Distanzfolien direkt aufeinander liegen. In dieser Position wird eine feste Verbindung zwischen den Enden der Distanzleisten und dem Außenumfang der Flanschplatte hergestellt, vorzugsweise durch ein Laserschweißverfahren. Danach werden die Distanzfolien in radialer Richtung aus dem Spalt zwischen Spulenträger und Ankerscheibe abgezogen, wodurch sich dann an der Federdruckbremse der gewünschte Luftspalt ergibt. Nach dem Zurückfahren des Pressenstempels in dessen Ausgangslage ist die Federdruck-bremse dann als einbaufertige Einheit bereit für die Auslieferung.

Durch den beschriebenen Aufbau und das Herstellverfahren kann eine kostengünstige elektromagnetische Federdruckbremse mit optimierter Leistungsdichte und hoher Lebensdauer bereitgestellt werden, bei der durch konstruktive Maßnahmen der Reibradius des Bremsrotors ein Maximum erreicht, bei der die Polfläche des Spulenträgers mit nur wenig Unterbrechungen ein Höchstmaß an Magnet- und Federkraft ermöglicht und bei der Bauteiltoleranzen durch ein spezielles Herstellverfahren eliminiert werden, durch das ein exakter sehr kleiner Luftspalt zwischen Spulenträger und Ankerscheibe erzielbar ist.

Weitere vorteilhafte Details der Erfindung ergeben sich aus den Patentansprüchen sowie aus der Beschreibung der nachstehend genannten Zeichnungen.

### Figurenbeschreibung:

- **Fig. 1**: zeigt einen Längsschnitt durch eine elektromagnetische Federdruckbremse nach dem Stand der Technik sowie eine perspektivische Ansicht derselben mit einem Detail A.
- **Fig. 2**: zeigt einen Längsschnitt durch eine erste Ausführungsform einer erfindungsgemäßen Federdruckbremse sowie eine perspektivische Ansicht derselben mit einem Detail B.
- **Fig. 3**: zeigt eine Explosionsdarstellung der ersten Ausführungsform einer erfindungsgemäßen Federdruckbremse aus Fig. 2 sowie ein Detail C.
- **Fig. 4**: zeigt eine Explosionsdarstellung einer zweiten Ausführungsform einer erfindungsgemäßen Federdruckbremse sowie ein Detail D derselben.
- **Fig. 5**: zeigt eine Explosionsdarstellung einer dritten Ausführungsform einer erfindungsgemäßen Federdruckbremse sowie ein Detail E derselben.
- **Fig. 6**: zeigt einen Längsschnitt durch eine vierte Ausführungsform einer erfindungsgemäßen Federdruckbremse sowie eine perspektivische Ansicht derselben mit einem Detail F.
- **Fig. 7**: zeigt einen Längsschnitt durch die erste Ausführungsform einer erfindungsgemäßen Federdruckbremse aus Fig. 2 in einer ersten Abstimmvorrichtung sowie eine perspektivische Ansicht derselben.
- **Fig. 8**: zeigt einen Längsschnitt durch die dritte Ausführungsform einer erfindungsgemäßen Federdruckbremse aus Fig. 5 in einer zweiten Abstimmvorrichtung sowie eine perspektivische Ansicht derselben.

Wie in **Fig. 1** gezeigt ist bei der elektromagnetisch gelüfteten Federdruckbremse (BR) nach dem Stand der Technik ein Spulenträger (1) über Distanzbuchsen (7) und Schrauben (8) mit einer Flanschplatte (9) verbunden. Zwischen dem Spulenträger (1) und der Flanschplatte (9) sind eine Ankerscheibe (4) und ein beiderseits mit Reibbelägen (5.1) bestückter Bremsrotor (5) angeordnet, wobei der Bremsrotor (5) über eine Rotorverzahnung (5.2) formschlüssig mit einer Zahnnabe (6) in Eingriff steht, die ihrerseits mit einer nicht dargestellten Welle beispielsweise eines Motors verbunden ist.

Wie aus **Detail A** ersichtlich, ist die Ankerscheibe (4) über Ankermitnehmernuten (4.1) drehfest und axial beweglich auf den Distanzbuchsen (7) geführt und wird bei nicht bestromter Magnetspule (3) durch Druckfedern (11), die sich in Federbohrungen (1.2) des Spulenträgers (1) befinden, gegen den Bremsrotor (5) gepresst. Dadurch wird der Bremsrotor (5) zwischen der Ankerscheibe (4) und der Flanschplatte (9) eingespannt und hindert über die Zahnnabe (6) die nicht dargestellte Welle an einer Drehung um die Rotationsachse (A). Durch Bestromen der Magnetspule (3), die in einem Spulenraum (1.1) des Spulenträgers (1) eingebettet ist, wird die Ankerscheibe (4) gegen die Kraft der Druckfedern (11) vom Spulenträger (1) angezogen und gibt den Bremsrotor (5) frei, der sich jetzt zusammen mit der Zahnnabe (6) und der Welle frei um die Rotationsachse (A) drehen kann.

Es ist klar ersichtlich, dass der Außendurchmesser des Bremsrotors (5) durch die Dimension der Distanzbuchsen (7) limitiert ist und dass die Größe des sich bei geschlossener Federdruckbremse (BR) ergebenden Luftspalts (L) zwischen Spulenträger (1) und Ankerscheibe (4) von der Dicke der Ankerscheibe (4) und des Bremsrotors (5) und von der axialen Erstreckung der Distanzbuchsen (7) sowie den entsprechenden Maßtoleranzen abhängt. Durch die begrenzte Größe des Bremsrotors (5) und die erforderliche Größe des Luftspalts (L) weist die Federdruckbremse (BR) nach dem Stand der Technik eine eingeschränkte Leistungsdichte und eine eingeschränkte Lebensdauer auf.

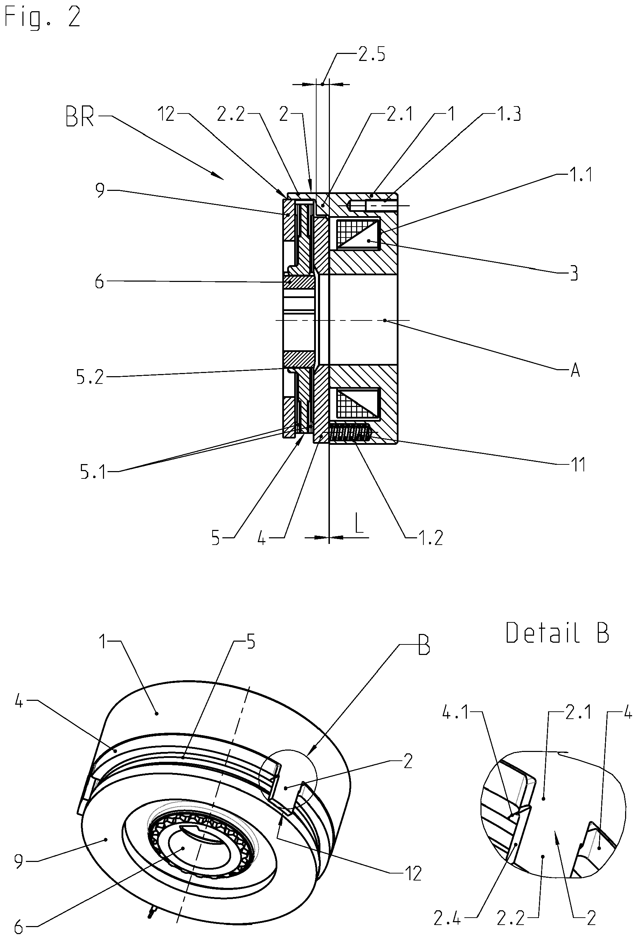

In **Fig. 2** ist eine erste Ausführungsform einer erfindungsgemäßen Federdruckbremse (BR) dargestellt, die hinsichtlich der räumlichen Anordnung von Spulenträger (1), Ankerscheibe (4), Bremsrotor (5) und Flanschplatte (9) weitgehend dem Stand der Technik entspricht. Lediglich die Funktion der bei Federdruckbremsen (BR) nach dem Stand der Technik verwendeten Distanzbuchsen (7) wird von Distanzleisten (2) übernommen, die eine einteilige Geometrie mit dem Spulenträger (1) bilden. Dabei stellen die Distanzleisten (2) zum einen mit ihrem Zentrierbereich (2.2) über eine Verbindungsstelle (12) die Verbindung zwischen Spulenträger (1) und Gegenreibfläche (9) her und übernehmen zum anderen mit ihrem Führungsbereich (2.1) über Ankermitnehmernuten (4.1) die Funktion der drehfesten und axial beweglichen Führung der Ankerscheibe (4), wie dies aus **Detail B** ersichtlich ist. Durch die geringe radiale Erstreckung des Zentrierbereiches (2.2) kann der Außendurchmesser des Bremsrotors (5) gegenüber dem Stand der Technik erheblich vergrößert werden, was die Leistungsdichte und Lebensdauer der Federdruckbremse (BR) in Verbindung mit dem geringen Luftspalt (L) deutlich steigert. Das Herstellverfahren der Federdruckbremse (BR), durch das sich der geringe Luftspalt (L) erzielen lässt, wird an anderer Stelle beschrieben.

Weiterhin ist der Zentrierbereich (2.2) der Distanzleisten (2) an beiden den Ankermitnehmernuten (4.1) zugewandten Seiten mit Freiflächen (2.4) versehen und die axiale Führungshöhe (2.5) des Führungsbereiches (2.1) ist geringer ausgeführt als die axiale Dicke der Ankerscheibe (4). Dadurch kann auch bei Verschleiß im Führungsbereich (2.1) ausgeschlossen werden, dass sich die Ankerscheibe (4) in den Führungsbereich (2.1) eingräbt und mit diesem eine formschlüssige Verbindung eingeht. Folglich ist sichergestellt, dass die Ankerscheibe (4) beim Bremsen die volle Kraft der Druckfedern (11) auf den Rotor (5) und die Flanschplatte (9) überträgt.

Die Befestigung der Federdruckbremse (BR) an der Peripherie, beispielsweise am Gehäuseinnern eines Servomotors, kann über Anschraubgewinde (1.3) erfolgen, die in die Rückseite des Spulenträgers (1) eingebracht sind. Gleichermaßen ist eine Befestigung der Federdruckbremse (BR) über Gewinde, Bolzen oder Bohrungen im Bereich der Flanschplatte (9) denkbar.

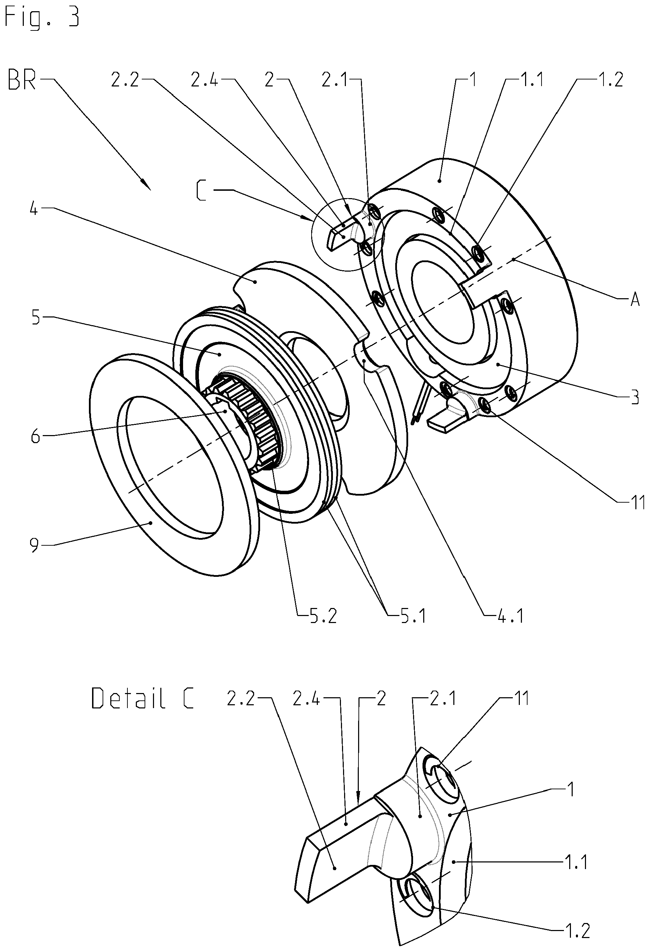

**Fig. 3** und **Detail C** stellen nochmals die Federdruckbremse (BR) aus **Fig. 2** dar, wobei aus der perspektivischen Darstellung mit **Detail C** weitere Einzelheiten hervorgehen. Die einteilig mit dem Spulenträger (1) gebildeten Distanzleisten (2) weisen Führungsbereiche (2.1) zur drehfesten und axial beweglichen Führung der Ankerscheibe (4) und sich daran axial anschließende Zentrierbereiche (2.2) zur Zentrierung der Flanschplatte (9) auf. Die Führungsbereiche (2.1) sind dabei kreisbogenförmig ausgebildet, um zur Verringerung des Verschleißes eine große Kontaktfläche gegenüber den Ankermitnehmernuten (4.1) zu bilden und um ein Verkanten der Ankerscheibe (4) bei deren Axialbewegung sicher zu verhindern. Dies ist insbesondere wichtig, weil es sich bei elektromagnetischen Federdruckbremsen (BR) meist um sicherheitsrelevante Bauteile nach dem Fail-Safe Prinzip handelt, die im energielosen Zustand ihre volle Bremswirkung entfalten müssen.

Bei der vorgeschlagenen Gestaltung des Führungsbereiches (4.1) kann außerdem eine Ankerscheibe (4) verwendet werden, die der bewährten Bauform bei einer Federdruckbremse (BR) nach dem Stand der Technik gemäß **Fig. 1** entspricht.

Die Zentrierbereiche (2.2) sind beiderseits mit seitlich liegenden Freiflächen (2.4) versehen, um auch bei Verschleiß am Führungsbereich (2.1) beim Bremsen die volle Beweglichkeit der Ankerscheibe (4) sicherzustellen.

Durch die kreisbogenförmige Innenkontur des Zentrierbereiches (2.2) kann eine kostengünstig herstellbare kreisringförmige Flanschplatte (9) verwendet werden, deren Außenkontur sich exakt in den Zentrierbereich (2.2) einfügt.

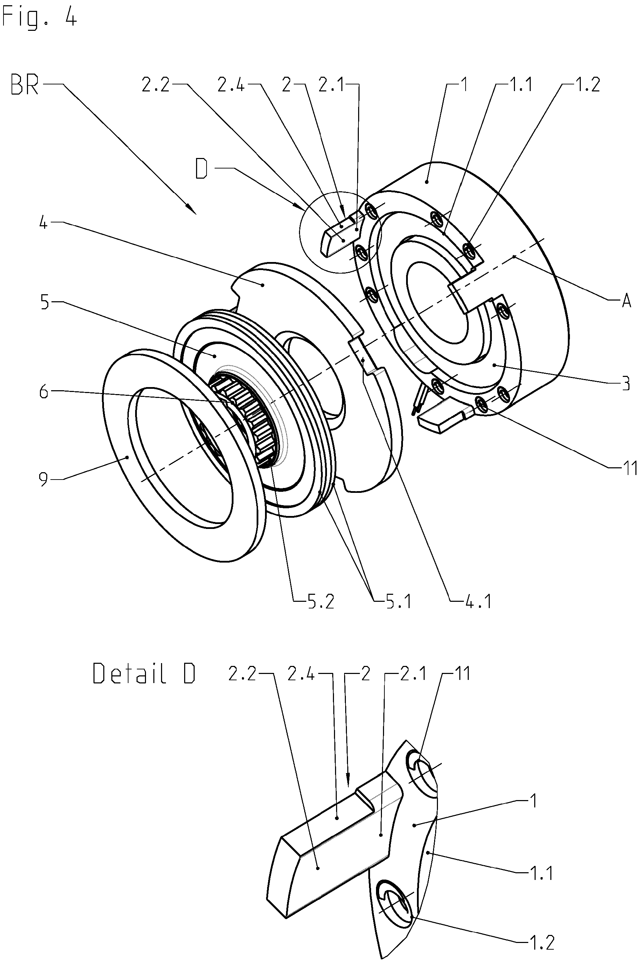

Aus **Fig. 4** und dem **Detail D** ist eine alternative Gestaltung der einteilig mit dem Spulenträger (1) ausgeführten Distanzleisten (2) ersichtlich. Der Führungsbereich (2.1) zur drehfesten axial beweglichen Führung der Ankerscheibe (4) und der Zentrierbereich (2.2) zur Aufnahme der Flanschplatte (9) weisen hier über die Längserstreckung der Distanzleiste (2) einen in radialer Richtung gleichen, sehr kostengünstig herstellbaren Querschnitt auf und die Polfläche des Spulenträgers (1) kann dadurch weiter vergrößert werden.

Lediglich im Zentrierbereich (2.2) weisen die Distanzleisten (2) durch die Freiflächen (2.4) eine geringere Erstreckung in Umfangsrichtung auf, um beim Bremsen die volle Beweglichkeit der Ankerscheibe (4) sicherzustellen.

Die Ankerscheibe (4) verfügt im vorliegenden Beispiel über entsprechende Ankermitnehmernuten (4.1) mit rechteckigem Querschnitt.

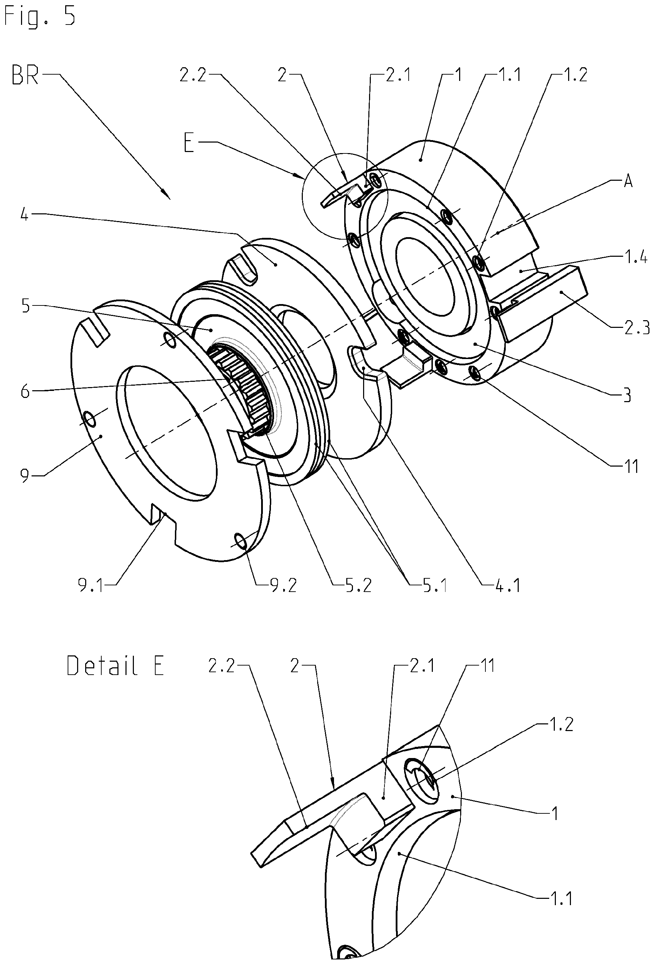

Aus **Fig. 5** mit dem **Detail E** ist eine weitere Ausführungsform der erfindungsgemäßen Federdruckbremse (BR) ersichtlich, bei der die Distanzleisten (2) und der Spulenträger (1) nicht einteilig ausgeführt sind. Die Distanzleisten (2) bestehen hierbei jeweils aus einem Zentrierbereich (2.2), einem Führungsbereich (2.1) und einem Leistenschaft (2.3), der in eine komplementäre axial verlaufende Aufnahmenut (1.4) des Spulenträgers (1) eingefügt und dort mit dem Spulenträger (1) fest verbunden ist, beispielsweise durch Schweißen, Kleben, Verschrauben, Nieten, Bördeln oder ein vergleichbares alternatives Verbindungsverfahren. Der Leistenschaft (2.3) weist bei diesem Beispiel eine größere radiale Erstreckung auf als der Zentrierbereich (2.2) und überragt in axialer Richtung die Polfläche des Spulenträgers, so dass der Leistenschaft (2.3) hier auch die Funktion des Führungsbereiches (2.1) übernimmt. Die Ankermitnehmernuten (4.1) der Ankerscheibe (4) sind dabei mit einer entsprechend komplementären Geometrie ausgeführt.

Alternativ ist es auch denkbar, die Distanzleisten (2) auf ihrer ganzen Längserstreckung mit einem konstanten Querschnitt auszuführen oder beim Leistenschaft (2.3) eine geringere radiale Erstreckung vorzusehen als im Führungsbereich (2.1) und Zentrierbereich (2.2).

Weiterhin ist es auch möglich, den Zentrierbereich (2.2) der Distanzleisten (2) wie in **Fig. 2** bis **Fig. 4** mit geeigneten Freiflächen (2.4) zu versehen.

Für die Befestigung der dargestellten Federdruckbremse (BR) an der Peripherie überragt der Außendurchmesser der Flanschplatte (9) den Spulenträger (1), so dass die Federdruckbremse (BR) beispielsweise auch von der Seite des Spulenträgers (1) her durch Befestigungsbohrungen (9.2) hindurch erfolgen kann. Gleichermaßen ist eine Befestigung der Federdruckbremse (BR) weiterhin über Anschraubgewinde (1.3) oder entsprechende Bohrungen oder Bolzen im Bereich des Spulenträgers (1) denkbar.

Die Verbindung zwischen der Flanschplatte (9) und den Distanzleisten (2) wird im vorliegenden Beispiel gemäß **Fig. 5** zwischen dem jeweiligen Nutgrund der Flanschplatten-Nuten (9.1) und den Zentrierbereichen (2.2) der Distanzleisten (2) hergestellt.

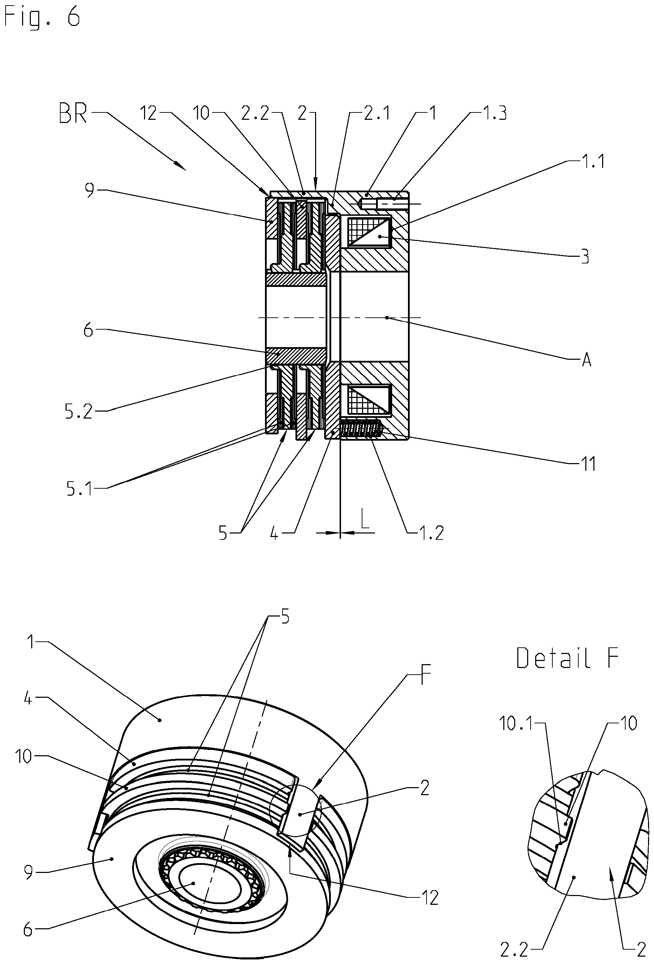

Der Längsschnitt in **Fig. 6** mit einer perspektivischen Darstellung und einem **Detail F** zeigt eine Federdruckbremse (BR) in Doppelrotor-Bauweise, wodurch das erzielbare Bremsdrehmoment durch die Verdoppelung der Zahl der Reibflächen ebenfalls verdoppelt werden kann. Alternativ sind auch Ausführungen mit drei oder mehr Bremsrotoren (5) denkbar. Bei der dargestellten Federdruckbremse (BR) bilden die Distanzleisten (2) und der Spulenträger (1) eine einteilige Geometrie, wobei die Zentrierbereiche (2.2) der Distanzleisten (2) für die Aufnahme der zusätzlichen Bauteile parallel zur Rotationsachse (A) eine größere axiale Erstreckung aufweisen. Demnach besteht die Federdruckbremse (BR) aus einem Spulenträger (1), einer Ankerscheibe (4), einem ersten Bremsrotor (5), einer Zwischenplatte (10), einem zweiten Bremsrotor (5) und einer abschließenden Flanschplatte (9), wobei die Bauteile in der genannten Reihenfolge angeordnet sind. Die Ankerscheibe (4) ist auf den Führungsbereichen (2.1) der Distanzleisten (2) drehfest und axial beweglich gelagert, wobei die Führungsbereiche (2.1) mit geringer oder großer radialer Erstreckung sowie eckig oder mit entsprechenden Verrundungen ausgeführt sein können. Im Zentrierbereich (2.2) der Distanzleisten (2) befindet sich die Zwischenplatte (10), die dort über ihre Zwischenplattenmitnehmernuten (10.1) drehfest und axial beweglich auf dem Zentrierbereich (2.2) gelagert ist.

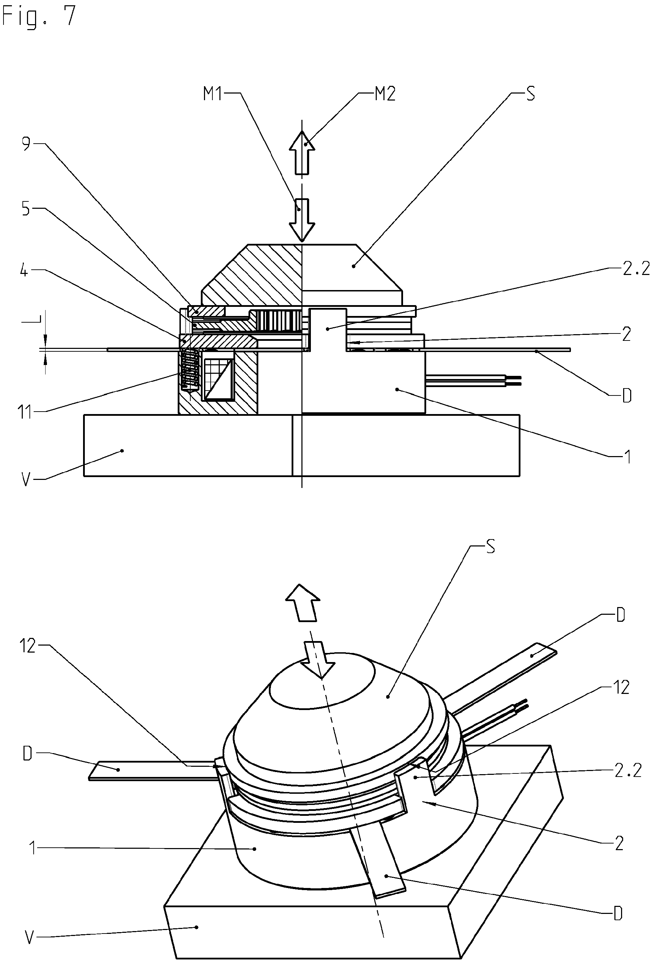

Anhand des Halbschnittes und der perspektivischen Darstellung in **Fig. 7** wird ein erstes Herstellverfahren erläutert, durch das mit einer Verringerung des Luftspaltes (L) eine Steigerung des möglichen Bremsdrehmoments erzielt wird. Das Verfahren ist für alle bisher anhand **Fig. 2** bis **Fig. 6** beschriebenen Federdruckbremsen (BR) anwendbar, aber auch für Federdruckbremsen (BR) mit nichtrunder, beispielsweise rechteckiger oder polygonaler Außenkontur, bei denen die Funktionsteile in vergleichbarer Weise angeordnet sind. Bei dem am Beispiel der **Fig. 7** beschriebenen Herstellverfahren, das mit nur einem oder auch mit mehreren Pressenstempeln (S) durchführbar ist, wird zunächst der mit Druckfedern (11) bestückte Spulenträger (1) auf die Vorrichtungsplatte (V) gelegt. Anschließend werden über den Umfang verteilt mindestens zwei Distanzfolien (D), vorzugsweise drei Distanzfolien (D), auf die Polfläche des Spulenträgers (1) aufgelegt und dann die Ankerscheibe (4), der Bremsrotor (5) und die Flanschplatte (9) in der genannten Reihenfolge platziert. Alternativ können die Distanzfolien (D) auch zwischen Ankerscheibe (4) und Bremsrotor (5) oder zwischen Bremsrotor (5) und Flanschplatte (9) platziert werden. Die Dicke der verwendeten Distanzfolien (D) entspricht hierbei dem gewünschten späteren Luftspalt (L) der Federdruckbremse (BR). Anschließend drückt der mindestens eine Pressenstempel (S) die Flanschplatte (9) in Richtung einer ersten Hubbewegung (M1), bis alle genannten Teile einschließlich der Distanzfolien (D) direkt aufeinander liegen. In dieser Position wird an den Verbindungsstellen (12) eine feste Verbindung zwischen den Enden der Distanzleisten (2) und dem Außenumfang der Flanschplatte (9) hergestellt, vorzugsweise durch ein Laserschweißverfahren. Danach werden die Distanzfolien (D) in radialer Richtung aus dem Spalt zwischen Spulenträger (1) und Ankerscheibe (4) abgezogen, wodurch sich dann an der Federdruckbremse (BR) der gewünschte Luftspalt (L) ergibt.

Der Pressenstempel (S) wird anschließend in Richtung der zweiten Hubbewegung (M2) zurückgefahren, die Federdruckbremse (BR) wird entnommen und ist als einbaufertige Einheit bereit für die Auslieferung. Es versteht sich von selbst, dass die vorstehend beschriebene Vorgehensweise keine Einschränkung hinsichtlich der räumlichen Orientierung der beschriebenen Bauteile darstellt. Die Vorrichtungsplatte (V) kann sich in jeder räumlichen Lage befinden, wobei sich dann die Lage der Teile der Federdruckbremse (BR) und des Pressenstempels (S) an der Lage der Vorrichtungsplatte (V) orientiert. Vorzugsweise liegt die Vorrichtungsplatte (V) räumlich unten mit allen Teilen der Federdruckbremse (BR) und dem Pressenstempel (S) räumlich darüber.

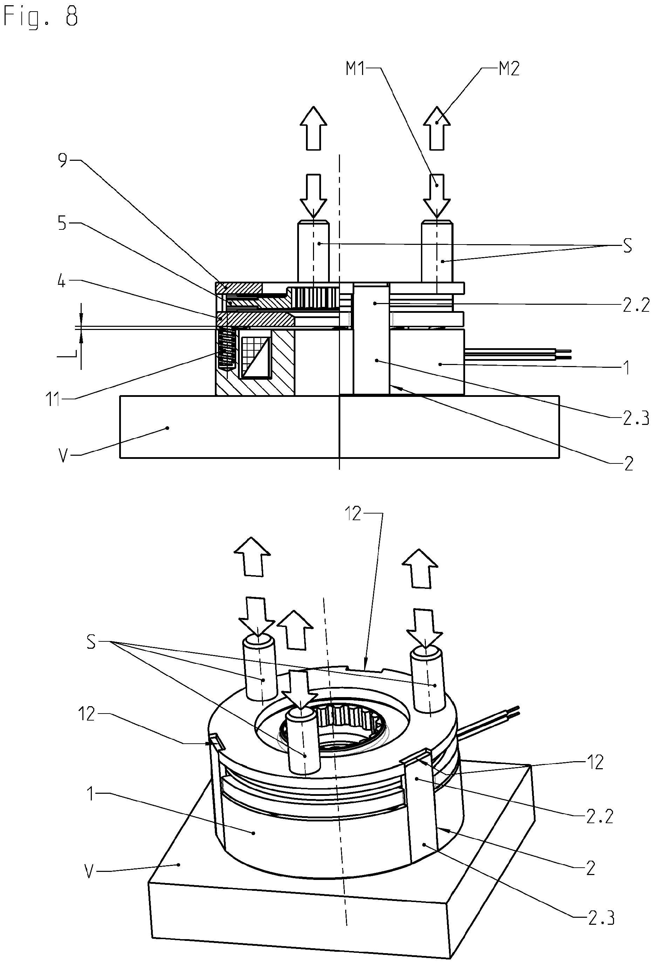

Ein alternatives Herstellverfahren wird anhand des Halbschnittes und der perspektivischen Ansicht in **Fig. 8** beschrieben. Bei dem alternativen Herstellverfahren ist vorgesehen, den mit Druckfedern (11) bestückten Spulenträger (1) mit der den Distanzleisten (2) gegenüberliegenden Planfläche auf eine Vorrichtungsplatte (V) zu legen und die Bauteile Ankerscheibe (4), Bremsrotor (5) und Flanschplatte (9) in der genannten Reihenfolge in den radial zwischen den Distanzleisten (2) vorhandenen Raum einzulegen. Anschließend wird mit einem konzentrisch zur Rotationsachse liegenden oder mit mehreren auf einem zur Rotationsachse konzentrischen Teilkreis liegenden Pressenstempeln (S) die Flanschplatte (9) soweit in Richtung einer ersten Hubbewegung (M1) gegen den Spulenträger (1) gedrückt, bis alle genannten Bauteile direkt aufeinanderliegen. Danach wird der einzelne oder die mehreren Pressenstempel (S) weggesteuert um den gewünschten Luftspalt (L) der Federdruckbremse (BR) in Richtung einer zweiten Hubbewegung (M2) bewegt.

Abschließend wird an der Verbindungsstelle (12) zwischen den der Flanschplatte (9) zugewandten Enden der Distanzleisten (2) und der Flanschplatte (9) eine feste Verbindung hergestellt, beispielsweise durch ein Schweiß-, Löt- oder Klebeverfahren, vorzugsweise ein Laserschweißverfahren. Dabei kann der Schweißlaser durch einen Roboter entlang des gewünschten Nahtverlaufes geführt werden.

Alternativ kann auch die Federdruckbremse (BR) mit dem zu verbindenden Bereich auf einer um die Rotationsachse (A) rotierenden Vorrichtungsplatte (V) an einem Schweißlaser entlanggeführt werden.

Wenn das beschriebene Herstellverfahren mit mehreren über den Umfang der Federdruckbremse (BR) verteilten Pressenstempeln (S) durchgeführt wird, von denen jeder für sich eine weggesteuerte Bewegung vollführt, können in vorteilhafter Weise über den Umfang verteilte unterschiedliche Bauhöhen-toleranzen des Spulenträgers (1) und/oder der Ankerscheibe (4) und/oder des Bremsrotors (5) ausgeglichen werden.

Bei Anwendung eines der Herstellverfahren nach **Fig. 7** oder **Fig. 8** an einer Federdruckbremse (BR) mit zwei Bremsrotoren (5) wie in **Fig. 6** dargestellt oder bei einer Federdruckbremse (BR) mit mehr als zwei Bremsrotoren (5) müssen gegenüber der Federdruckbremse (BR) mit einem Bremsrotor (5) lediglich mindestens ein zusätzlicher Bremsrotor (5) und mindestens eine Zwischenplatte (9) in den Raum zwischen den Führungsbereichen (2.2) der Distanzleisten (2) eingelegt werden. Die übrigen Verfahrensschritte entsprechen der im Zusammenhang mit **Fig. 7** und **Fig. 8** beschriebenen Vorgehensweise.

Bei der Ausführung der Federdruckbremse (BR) gemäß **Fig. 5** **,** bei der Spulenträger (1) und Distanzleisten (2) als separate Bauteile ausgebildet sind, ist eine alternative Variante des Herstellverfahrens denkbar, die im Folgenden beschrieben wird. Dabei werden in einem ersten Schritt die noch losen Distanzleisten (2) vorab an den vorgesehenen Verbindungsstellen (12) mit der Flanschplatte (9) verbunden und die dadurch entstandene Baugruppe später am Spulenträger (1) fixiert.

Bei einem Herstellverfahren analog zu dem in **Fig. 7** dargestellten Verfahren wird in einem zweiten Schritt zunächst die aus Flanschplatte (9) und Distanzleisten (2) bestehende Baugruppe auf die Vorrichtungsplatte (V) gelegt und anschließend werden der Bremsrotor (5), die Ankerscheibe (4), die Distanzfolien (D) und der Spulenträger (1) mit den Druckfedern (11) aufgebracht, wobei dann jeder Leistenschaft (2.3) in die zugehörige Aufnahmenut (1.4) des Spulenträgers greift. Anschließend wird der Spulenträger (1) durch einen oder mehrere Pressenstempel (S) in Richtung einer ersten Hubbewegung (M1) zur Flanschplatte bewegt, bis alle Bauteile unmittelbar aufeinanderliegen.

In diesem Zustand werden die Distanzleisten (2) bei Bedarf radial in die Aufnahmenuten (1.4) des Spulenträgers (1) gedrückt und dann am Spulenträger befestigt, beispielsweise durch ein Schweiß-, Löt- oder Klebeverfahren, in bevorzugter Weise durch ein Laserschweißverfahren. Anschließend werden die Distanzfolien (D) radial aus der Federdruckbremse (BR) abgezogen, der mindestens eine Pressenstempel (S) wird in Richtung der zweiten Hubbewegung (M2) in seine Ausgangsstellung zurückgeführt und die Federdruckbremse (BR) kann als fertige Einheit entnommen werden.

Bei einem Herstellverfahren analog zu dem in **Fig. 8** dargestellten Verfahren wird in einem zweiten Schritt zunächst die aus Flanschplatte (9) und Distanzleisten (2) bestehende Baugruppe auf die Vorrichtungsplatte (V) gelegt und anschließend werden der Bremsrotor (5), die Ankerscheibe (4) und der Spulenträger (1) mit den Druckfedern (11) aufgebracht, wobei dann jeder Leistenschaft (2.3) in die zugehörige Aufnahmenut (1.4) des Spulenträgers greift. Anschließend wird der Spulenträger (1) durch einen oder mehrere Pressenstempel (S) in Richtung einer ersten Hubbewegung (M1) zur Flanschplatte bewegt, bis alle Bauteile unmittelbar aufeinanderliegen.

Danach wird der mindestens eine Pressenstempel (S) weggesteuert in Richtung der zweiten Hubbewegung (M2) um eine Stecke zurückgefahren, die dem an der Federdruckbremse (BR) gewünschten Luftspalt (L) entspricht. In diesem Zustand werden die Distanzleisten (2) bei Bedarf radial in die Aufnahmenuten (1.4) des Spulenträgers (1) gedrückt und dann am Spulenträger befestigt, beispielsweise durch ein Schweiß-, Löt- oder Klebeverfahren, in bevorzugter Weise durch ein Laserschweißverfahren. Zuletzt wird der mindestens eine Pressenstempel (S) in seine Ausgangslage zurückgeführt und die Federdruckbremse (BR) kann als fertige Einheit entnommen werden.

### Bezugszeichenliste:

- 1: Spulenträger
- 1.1: Spulenraum
- 1.2: Federbohrung
- 1.3: Anschraubgewinde
- 1.4: Aufnahmenut
- 2: Distanzleiste
- 2.1: Führungsbereich
- 2.2: Zentrierbereich
- 2.3: Leistenschaft
- 2.4: Freifläche
- 2.5: Führungshöhe
- 3: Magnetspule
- 4: Ankerscheibe
- 4.1: Ankermitnehmernut
- 5: Bremsrotor
- 5.1: Reibbelag
- 5.2: Rotorverzahnung
- 6: Zahnnabe
- 7: Distanzbuchse
- 8: Schraube
- 9: Flanschplatte
- 9.1: Flanschplatten-Nut
- 9.2: Befestigungsbohrung
- 10: Zwischenplatte
- 10.1: Zwischenplattenmitnehmernut
- 11: Druckfeder
- 12: Verbindungsstelle
- A: Rotationsachse
- BR: Federdruckbremse
- D: Distanzfolie
- L: Luftspalt
- M1: Erste Hubbewegung
- M2: Zweite Hubbewegung
- S: Pressenstempel
- V: Vorrichtungsplatte

## Patentansprüche

1. Elektromagnetisch gelüftete Federdruckbremse (BR) mit einer Rotationsachse (A) zum Anbau an eine Maschinenwand, an ein Motorengehäuse oder ähnliches,
wobei die Federdruckbremse (BR) aus einem Spulenträger (1), aus mindestens einer Ankerscheibe (4), mindestens einem Bremsrotor (5) und einer Flanschplatte (9) besteht,
wobei der Spulenträger (1) mit einer oder mehreren Magnetspulen (3) und mit einer oder mehreren Druckfedern (11) bestückt ist,
wobei die Teile vom Spulenträger (1) bis zur Flanschplatte (9) in der genannten Reihenfolge hintereinander entlang der Rotationsachse (A) angeordnet sind, wobei der Spulenträger (1) im Bereich seines Außenumfangs von der Polfläche ausgehend mindestens drei sich axial erstreckende Distanzleisten (2) aufweist, die mit dem Spulenträger (1) fest verbunden sind,
wobei jede der Distanzleisten (2) mit einem Führungsbereich (2.1) über eine korrespondierende Ankermitnehmernut (4.1) der mindestens einen Ankerscheibe (4) eine drehfeste und axial bewegliche Lagerung der mindestens einen Ankerscheibe (4) sicherstellt,
wobei der Bremsrotor (5) zum Erzielen einer Bremswirkung durch die Kraft der mindestens einen Druckfeder (11) zwischen der mindestens einen Ankerscheibe (4) und der Flanschplatte (9) eingespannt wird
und wobei die mindestens eine Ankerscheibe (4) zum Aufheben der Bremswirkung durch Bestromen der mindestens einen Magnetspule (3) gegen die Kraft der mindestens einen Druckfeder (11) zum Spulenträger (1) gezogen wird, **dadurch gekennzeichnet, dass** jede der Distanzleisten (2) über einen sich axial an den Führungsbereich (2.1) anschließenden Zentrierbereich (2.2) verfügt, der über eine Verbindungsstelle (12) mit der Flanschplatte (9) fest verbunden ist.

2. Federdruckbremse (BR) nach Anspruch 1, **dadurch gekennzeichnet,**
**dass** der Spulenträger (1) zusammen mit den Distanzleisten (2) einteilig ausgeführt ist.

3. Federdruckbremse (BR) nach Anspruch 1 und 2, **dadurch gekennzeichnet, dass** die Distanzleisten (2) über ihre axiale Erstreckung einen einheitlichen Querschnitt von Zentrierbereich (2.2) und Führungsbereich (2.1) mit raumoptimierter geringer radialer Erstreckung aufweisen.

4. Federdruckbremse (BR) nach Anspruch 1 und 2, **dadurch gekennzeichnet, dass** die Distanzleisten (2) über ihre axiale Erstreckung einen voneinander abweichenden Querschnitt von Führungsbereich (2.1) und Zentrierbereich (2.2) aufweisen,
dass der Führungsbereich (2.1) eine größere radiale Erstreckung aufweist als der Zentrierbereich (2.2)
und dass der Führungsbereich (2.1) in seinem der Ankermitnehmernut (4.1) zugewandten Bereich eine verrundete oder eine eckige Geometrie aufweist.

5. Federdruckbremse (BR) nach mindestens einem der Ansprüche 1 bis 4, **dadurch gekennzeichnet, dass** die Distanzleisten (2) über ihre axiale Erstreckung einen Querschnitt aufweisen, der mindestens an der Innenseite des Zentrierbereiches (2.2) dem Teil einer Zylindermantelfläche mit der Rotationsachse (A) entspricht.

6. Federdruckbremse (BR) nach Anspruch 1, **dadurch gekennzeichnet,**
**dass** der Spulenträger (1) und die Distanzleisten (2) als separate Bauteile ausgeführt sind.

7. Federdruckbremse (BR) nach Anspruch 6, **dadurch gekennzeichnet,**
**dass** die Distanzleisten (2) über ihre axiale Erstreckung im Bereich von Leistenschaft (2.3), Zentrierbereich (2.2) und Führungsbereich (2.1) einen einheitlichen Querschnitt aufweisen.

8. Federdruckbremse (BR) nach Anspruch 6, **dadurch gekennzeichnet,**
**dass** die Distanzleisten (2) über ihre axiale Erstreckung einen Querschnitt aufweisen, bei dem die radiale Erstreckung des Leistenschafts (2.3) gegenüber der radialen Erstreckung des Führungsbereiches (2.1) und/oder des Zentrierbereiches (2.2) größer ist.

9. Federdruckbremse (BR) nach Anspruch 6, **dadurch gekennzeichnet,**
**dass** die Distanzleisten (2) über ihre axiale Erstreckung einen Querschnitt aufweisen, bei dem die radiale Erstreckung des Leistenschafts (2.3) gegenüber der radialen Erstreckung des Führungsbereiches (2.1) und/oder des Zentrierbereiches (2.2) kleiner ist.

10. Federdruckbremse (BR) nach mindestens einem der Ansprüche 6 bis 9, **dadurch gekennzeichnet, dass** die Distanzleisten (2) über ihre axiale Erstreckung einen rechteckigen Querschnitt aufweisen, und dass die Aufnahmenuten (1.4) des Spulenträgers (1) zwischen Nutgrund und Nutflanken einen annähernd rechten Winkel aufweisen.

11. Federdruckbremse (BR) nach mindestens einem der vorhergehenden Ansprüche, **dadurch gekennzeichnet, dass** die Distanzleisten (2) bezogen auf eine Rotationsachse (A) vorzugsweise in gleichen Winkelabständen zueinander am Spulenträger (1) angeordnet sind.

12. Federdruckbremse (BR) nach mindestens einem der vorhergehenden Ansprüche, **dadurch gekennzeichnet, dass** die Flanschplatte (9) die Form eines glatten Kreisringes aufweist.

13. Federdruckbremse (BR) nach mindestens einem der vorhergehenden Ansprüche, **dadurch gekennzeichnet, dass** die Flanschplatte (9) die Form eines Kreisringes aufweist, und dass die radial zum Zentrierbereich (2.2) hin gerichteten Kontaktbereiche der Flanschplatte (9) jeweils eine ebene Geometrie bilden.

14. Federdruckbremse (BR) nach mindestens einem der vorhergehenden Ansprüche, **dadurch gekennzeichnet, dass** die Zentrierbereiche (2.2) der Distanzleisten (2) über seitlich angeordnete einander gegenüberliegende Freiflächen (2.4) verfügen, so dass die Zentrierbereiche (2.2) in Umfangsrichtung eine geringere Breite aufweisen als die Führungsbereiche (2.1).

15. Herstellverfahren für eine elektromagnetisch gelüftete Federdruckbremse (BR), wobei die Federdruckbremse (BR) aus einem Spulenträger (1), aus mindestens einer Ankerscheibe (4), mindestens einem Bremsrotor (5) und einer Flanschplatte (9) besteht,
wobei der Spulenträger (1) mit einer oder mehreren Magnetspulen (3) und mit einer oder mehreren Druckfedern (11) bestückt ist,
wobei die Teile vom Spulenträger (1) bis zur Flanschplatte (9) in der genannten Reihenfolge hintereinander entlang der Rotationsachse (A) angeordnet sind, wobei der Spulenträger (1) im Bereich seines Außenumfangs von der Polfläche ausgehend mindestens drei sich axial erstreckende Distanzleisten (2) aufweist, die über einen Führungsbereich (2.1) eine drehfeste und axial bewegliche Lagerung der mindestens einen Ankerscheibe (4) sicherstellen und die über einen Zentrierbereich (2.2) und über eine Verbindungsstelle (12) eine feste Verbindung zur Flanschplatte (9) ermöglichen,
wobei die Einzelteile der Federdruckbremse (BR) vom Spulenträger (1) bis zur Flanschplatte (9) in der genannten Reihenfolge in eine Vorrichtung eingelegt werden, die aus einer Vorrichtungsplatte (V) und mindestens einem Pressenstempel (S) besteht,
wobei entweder der Pressenstempel (S) alle Teile der Federdruckbremse (BR) in direkten Kontakt gegen die Vorrichtungsplatte (V) aufeinanderdrückt, anschließend weggesteuert um das Maß des gewünschten Luftspaltes (L) zurückfährt und in dieser Stellung die Distanzleisten (2) mit der Flanschplatte (9) oder mit dem Spulenträger (1) verbunden werden,
oder wobei der Pressenstempel (S) alle Teile der Federdruckbremse (BR) mit dazwischen eingelegten Distanzfolien (D) in direkten Kontakt gegen die Vorrichtungsplatte (V) aufeinanderdrückt, anschließend die Distanzleisten (2) mit der Flanschplatte (9) oder mit dem Spulenträger (1) verbunden werden und am Ende die die Distanzfolien (D) aus der Federdruckbremse (BR) entfernt werden.

16. Herstellverfahren nach Anspruch 15, **dadurch gekennzeichnet, dass** vor dem Beginn des Herstellverfahrens die Distanzleisten (2) mit dem Spulenträger (1) eine fest verbundene vorgefertigte Einheit bilden, und dass in der Vorrichtung während des Herstellverfahrens eine Verbindung zwischen den Distanzleisten (2) und der Flanschplatte (9) hergestellt wird.

17. Herstellverfahren nach Anspruch 15, **dadurch gekennzeichnet, dass** vor dem Beginn des Herstellverfahrens die Distanzleisten (2) mit der Flanschplatte (9) eine fest verbundene vorgefertigte Einheit bilden, und dass in der Vorrichtung während des Herstellverfahrens eine Verbindung zwischen den Distanzleisten (2) und dem Spulenträger (1) hergestellt wird.

18. Herstellverfahren nach einem der Ansprüche 16 oder 17, **dadurch gekennzeichnet, dass** die Verbindung zwischen Distanzleisten (2) und Spulenträger (1) und/oder zwischen Distanzleisten (2) und Flanschplatte (9) durch ein Klebe-, Löt-, Schraub- oder Schweißverfahren hergestellt wird.

19. Herstellverfahren nach Anspruch 18, **dadurch gekennzeichnet, dass** die Verbindung zwischen Distanzleisten (2) und Spulenträger (1) und/oder zwischen Distanzleisten (2) und Flanschplatte (9) durch ein bevorzugtes Laserschweißverfahren hergestellt wird.

20. Federdruckbremse (BR) nach mindestens einem der Ansprüche 1 bis 14 und Herstellverfahren nach einem der Ansprüche 15-19, **dadurch gekennzeichnet, dass** die Federdruckbremse (BR) und insbesondere der Spulenträger (1) eine runde Außenkontur aufweisen, vorzugsweise eine kreisrunde Außenkontur.

21. Federdruckbremse (BR) nach mindestens einem der Ansprüche 1 bis 14 und Herstellverfahren nach einem der Ansprüche 15-19, **dadurch gekennzeichnet, dass** die Federdruckbremse (BR) und insbesondere der Spulenträger (1) eine rechteckige Außenkontur aufweisen, vorzugsweise eine quadratische Außenkontur.

22. Federdruckbremse (BR) nach mindestens einem der Ansprüche 1 bis 14 und Herstellverfahren nach einem der Ansprüche 15-19, **dadurch gekennzeichnet, dass** die Federdruckbremse (BR) und insbesondere der Spulenträger (1) eine vieleckige oder polygonale Außenkontur aufweisen.

## Claims

1. Electromagnetically released spring-loaded brake (BR) with a rotation axis (A) for mounting on a machine wall, on a motor housing or similar,
wherein the spring-loaded brake (BR) consists of a coil carrier (1), at least one armature disk (4), at least one brake rotor (5) and a flange plate (9), wherein the coil carrier (1) is equipped with one or more solenoid coils (3) and with one or more compression springs (11),
wherein the parts from the coil carrier (1) to the flange plate (9) are arranged one behind the other in the said sequence along the axis of rotation (A),
wherein the coil carrier (1) has at least three axially extending spacer strips (2) in the region of its outer circumference, starting from the pole face,
which are firmly connected to the coil carrier (1),
wherein each of the spacer strips (2) with a guide region (2.1) ensures a rotationally fixed and axially movable mounting of the at least one armature disk (4) via a corresponding armature driver groove (4.1) of the at least one armature disk (4),
wherein the brake rotor (5) is clamped between the at least one armature disk (4) and the flange plate (9) by the force of the at least one compression spring (11) in order to achieve a braking effect,
and wherein the at least one armature disk (4) for lifting the braking effect by energizing the at least one solenoid coil (3) against the force of the at least one compression spring (11) is drawn towards the coil carrier (1),
**characterized in that** each of the spacer strips (2) comprises a centering region (2.2) axially adjoining the guide area (2.1), which is firmly connected to the flange plate (9) via a connection point (12).

2. Spring-loaded brake (BR) according to claim 1, **characterized in that** the coil carrier (1) is designed in one piece together with the spacer strips (2).

3. Spring-loaded brake (BR) according to claims 1 and 2, **characterized in that** the spacer strips (2) have a uniform cross-section of centering region (2.2) and guide region (2.1) with a space-optimized small radial extension over their axial extension.

4. Spring-loaded brake (BR) according to claims 1 and 2, **characterized in that** the spacer strips (2) have a different cross-section of guide region (2.1) and centering region (2.2) over their axial extension,
that the guide region (2.1) has a greater radial extension than the centering region (2.2),
and that the guide area (2.1) has a rounded or angular geometry in its area facing the anchor driver groove (4.1).

5. Spring-loaded brake (BR) according to at least one of claims 1 to 4, **characterized in that** the spacer strips (2) have a cross-section over their axial extension which corresponds at least on the inside of the centering region (2.2) to the part of a cylinder surface with the axis of rotation (A).

6. Spring-loaded brake (BR) according to claim 1, **characterized in that** the coil carrier (1) and the spacer strips (2) are designed as separate components.

7. Spring-loaded brake (BR) according to claim 6, **characterized in that** the spacer strips (2) have a uniform cross-section over their axial extension in the region of the strip shaft (2.3), centering region (2.2) and guide region (2.1).

8. Spring-loaded brake (BR) according to claim 6, **characterized in that** the spacer strips (2) have a cross-section over their axial extension in which the radial extension of the strip shaft (2.3) is greater than the radial extension of the guide region (2.1) and/or the centering region (2.2).

9. Spring-loaded brake (BR) according to claim 6, **characterized in that** the spacer strips (2) have a cross-section over their axial extension in which the radial extension of the strip shaft (2.3) is smaller than the radial extension of the guide region (2.1) and/or the centering region (2.2).

10. Spring-loaded brake (BR) according to at least one of claims 6 to 9, **characterized in that** the spacer strips (2) have a rectangular cross-section over their axial extension, and **in that** the receiving grooves (1.4) of the coil carrier (1) have an approximately right angle between the groove base and groove flanks.

11. Spring-loaded brake (BR) according to at least one of the preceding claims, **characterized in that** the spacer strips (2) are preferably arranged at equal angular distances from one another on the coil carrier (1) in relation to an axis of rotation (A).

12. Spring-loaded brake (BR) according to at least one of the preceding claims, **characterized in that** the flange plate (9) has the shape of a smooth circular ring.

13. Spring-loaded brake (BR) according to at least one of the preceding claims, **characterized in that** the flange plate (9) has the shape of a circular ring, and **in that** the contact regions of the flange plate (9) directed radially towards the centering region (2.2) each form a flat geometry.

14. Spring-loaded brake (BR) according to at least one of the preceding claims, **characterized in that** the centering regions (2.2) of the spacer strips (2) have laterally arranged mutually opposite free surfaces (2.4), so that the centering regions (2.2) have a smaller width in the circumferential direction than the guide regions (2.1).

15. Manufacturing method for an electromagnetically released spring-loaded brake (BR), wherein the spring-loaded brake (BR) consists of a coil carrier (1), at least one armature disk (4), at least one brake rotor (5) and a flange plate (9),
wherein the coil carrier (1) is equipped with one or more solenoid coils (3) and with one or more compression springs (11),
wherein the parts from the coil carrier (1) to the flange plate (9) are arranged in the said sequence one behind the other along the axis of rotation (A), wherein the coil carrier (1) has at least three axially extending spacer strips (2) in the region of its outer circumference starting from the pole face, which spacer strips ensure a rotationally fixed and axially movable mounting of the at least one armature disk (4) via a guide region (2.1) and which ensure a fixed connection to the flange plate (9) via a centering area (2.2) and a connection point (12),
wherein the individual parts of the spring-loaded brake (BR) are inserted from the coil carrier (1) to the flange plate (9) in the aforementioned sequence into a device consisting of a device plate (V) and at least one press plunger (S),
whereby either the press plunger (S) presses all parts of the spring-loaded brake (BR) into direct contact against the fixture plate (V), then moves back by the desired air gap (L) and in this position the spacer strips (2) are connected to the flange plate (9) or to the coil carrier (1),
or whereby the press plunger (S) presses all parts of the spring-loaded brake (BR) with spacer foils (D) inserted between them into direct contact against the fixture plate (V), then the spacer strips (2) are connected to the flange plate (9) or to the coil carrier (1) and at the end the spacer foils (D) are removed from the spring-loaded brake (BR).

16. Manufacturing process according to claim 15, **characterized in that**, before the start of the manufacturing process, the spacer strips (2) form a firmly connected prefabricated unit with the coil carrier (1),
and **in that** during the manufacturing process a connection between the spacer strips (2) and the flange plate (9) is established.

17. Manufacturing method according to claim 15, **characterized in that**, before the start of the manufacturing process, the spacer strips (2) form a firmly connected prefabricated unit with the flange plate (9), and
**in that** a connection between the spacer strips (2) and the coil carrier (1) is produced in the device during the manufacturing process.

18. Manufacturing process according to one of claims 16 or 17, **characterized in that** the connection between the spacer strips (2) and the coil carrier (1) and/or between the spacer strips (2) and the flange plate (9) is produced by a bonding, soldering, screwing or welding process.

19. Manufacturing process according to claim 18, **characterized in that** the connection between the spacer strips (2) and the coil carrier (1) and/or between the spacer strips (2) and the flange plate (9) is produced by a preferred laser welding process.

20. Spring-loaded brake (BR) according to at least one of claims 1 to 14 and the manufacturing process according to one of claims 15 to 19, **characterized in that** the spring-loaded brake (BR) and in particular the coil carrier (1) have a round outer contour, preferably a circular outer contour.

21. Spring-loaded brake (BR) according to at least one of claims 1 to 14 and the manufacturing process according to one of claims 15 to 19, **characterized in that** that the spring-loaded brake (BR) and in particular the coil carrier (1) have a rectangular outer contour, preferably a square outer contour.

22. Spring-loaded brake (BR) according to at least one of claims 1 to 14 and manufacturing method according to one of claims 15 to 19, **characterized in that** that the spring-loaded brake (BR) and in particular the coil carrier (1) have a polygonal or polygonal outer contour.

## Revendications

1. Frein à pression de ressort (BR) desserré de manière électromagnétique comportant un axe de rotation (A) pour le montage sur une paroi de machine, sur un carter de moteur ou similaire,
dans lequel le frein à pression de ressort (BR) est constitué d'un support de bobine (1), d'au moins un disque d'induit (4), d'au moins un rotor de frein (5) et d'une plaque formant flasque (9),
dans lequel le support de bobine (1) est équipé d'une ou de plusieurs bobines magnétiques (3) et d'un ou de plusieurs ressorts de compression (11),
dans lequel les pièces allant du support de bobine (1) jusqu'à la plaque formant flasque (9) sont disposées les unes derrière les autres le long de l'axe de rotation (A) dans l'ordre mentionné,
dans lequel le support de bobine (1) présente, dans la zone de sa circonférence extérieure, en partant de la surface polaire, au moins trois lattes d'écartement (2) s'étendant axialement, lesquelles sont reliées de manière fixe au support de bobine (1),
dans lequel chacune des lattes d'écartement (2) assure, avec une zone de guidage (2.1), par l'intermédiaire d'une rainure d'entraînement d'induit (4.1) correspondante de l'au moins un disque d'induit (4), un montage fixe en rotation et mobile axialement de l'au moins un disque d'induit (4),
dans lequel le rotor de frein (5) est serré entre l'au moins un disque d'induit (4) et la plaque formant flasque (9) pour obtenir un effet de freinage par la force de l'au moins un ressort de compression (11)
et dans lequel l'au moins un disque d'induit (4) est tiré vers le support de bobine (1) à l'encontre de la force de l'au moins un ressort de compression (11) pour supprimer l'effet de freinage en alimentant en courant l'au moins une bobine magnétique (3), **caractérisé en ce que** chacune des lattes d'écartement (2) dispose d'une zone de centrage (2.2) se raccordant axialement à la zone de guidage (2.1) et reliée de manière fixe à la plaque formant flasque (9) par l'intermédiaire d'un point de liaison (12).

2. Frein à pression de ressort (BR) selon la revendication 1,
**caractérisé en ce que** le support de bobine (1) est réalisé d'une seule pièce avec les lattes d'écartement (2).

3. Frein à pression de ressort (BR) selon les revendications 1 et 2, **caractérisé en ce que** les lattes d'écartement (2) présentent, sur leur extension axiale, des sections transversales uniformes de la zone de centrage (2.2) et de la zone de guidage (2.1) comportant une faible extension radiale optimisée dans l'espace.

4. Frein à pression de ressort (BR) selon les revendications 1 et 2, **caractérisé en ce que** les lattes d'écartement (2) présentent, sur leur extension axiale, des sections transversales différentes les unes des autres de la zone de guidage (2.1) et de la zone de centrage (2.2),
**en ce que** la zone de guidage (2.1) présente une extension radiale plus grande que celle de la zone de centrage (2.2)
**et en ce que** la zone de guidage (2.1) présente une géométrie arrondie ou une géométrie angulaire dans sa zone tournée vers la rainure d'entraînement d'induit (4.1).

5. Frein à pression de ressort (BR) selon au moins l'une des
revendications 1 à 4, **caractérisé en ce que** les lattes d'écartement (2) présentent, sur leur extension axiale, une section transversale qui correspond, au moins sur le côté intérieur de la zone de centrage (2.2), à la partie d'une surface d'enveloppe de cylindre avec l'axe de rotation (A).

6. Frein à pression de ressort (BR) selon la revendication 1,
**caractérisé en ce que** le support de bobine (1) et les lattes d'écartement (2) sont réalisés en tant que composants séparés.

7. Frein à pression de ressort (BR) selon la revendication 6,
**caractérisé en ce que** les lattes d'écartement (2) présentent, sur leur extension axiale, dans la zone de la tige de latte (2.3), de la zone de centrage (2.2) et de la zone de guidage (2.1), des sections transversales uniformes.

8. Frein à pression de ressort (BR) selon la revendication 6,
**caractérisé en ce que** les lattes d'écartement (2) présentent, sur leur extension axiale, des sections transversales dans lesquelles l'extension radiale de la tige de latte (2.3) est supérieure à l'extension radiale de la zone de guidage (2.1) et/ou de la zone de centrage (2.2).

9. Frein à pression de ressort (BR) selon la revendication 6,
**caractérisé en ce que** les lattes d'écartement (2) présentent, sur leur extension axiale, des sections transversales dans lesquelles l'extension radiale de la tige de latte (2.3) est inférieure à l'extension radiale de la zone de guidage (2.1) et/ou de la zone de centrage (2.2).

10. Frein à pression de ressort (BR) selon au moins l'une des
revendications 6 à 9, **caractérisé en ce que** les lattes d'écartement (2) présentent, sur leur extension axiale, une section transversale rectangulaire, **et en ce que** les rainures de réception (1.4) du support de bobine (1) présentent un angle approximativement droit entre le fond de rainure et les flancs de rainure.

11. Frein à pression de ressort (BR) selon au moins l'une des revendications précédentes, **caractérisé en ce que** les lattes d'écartement (2) sont disposées sur le support de bobine (1) par rapport à un axe de rotation (A), de préférence à des distances angulaires égales les unes par rapport aux autres.

12. Frein à pression de ressort (BR) selon au moins l'une des revendications précédentes, **caractérisé en ce que** la plaque formant flasque (9) présente la forme d'un anneau circulaire lisse.

13. Frein à pression de ressort (BR) selon au moins l'une des revendications précédentes, **caractérisé en ce que** la plaque formant flasque (9) présente la forme d'un anneau circulaire, **et en ce que** les zones de contact de la plaque formant flasque (9) orientées radialement vers la zone de centrage (2.2) forment respectivement une géométrie plane.

14. Frein à pression de ressort (BR) selon au moins l'une des revendications précédentes, **caractérisé en ce que** les zones de centrage (2.2) des lattes d'écartement (2) disposent de surfaces libres (2.4) disposées latéralement et opposées les unes aux autres, de sorte que les zones de centrage (2.2) présentent une largeur inférieure à celle des zones de guidage (2.1) dans la direction périphérique.

15. Procédé de fabrication pour un frein à pression de ressort (BR) desserré de manière électromagnétique, dans lequel le frein à pression de ressort (BR) est constitué d'un support de bobine (1), d'au moins un disque d'induit (4), d'au moins un rotor de frein (5) et d'une plaque formant flasque (9),
dans lequel le support de bobine (1) est équipé d'une ou de plusieurs bobines magnétiques (3) et d'un ou de plusieurs ressorts de compression (11),
dans lequel les pièces allant du support de bobine (1) jusqu'à la plaque formant flasque (9) sont disposées les unes derrière les autres le long de l'axe de rotation (A) dans l'ordre mentionné,
dans lequel le support de bobine (1) présente, dans la zone de sa circonférence extérieure, en partant de la surface polaire, au moins trois lattes d'écartement (2) s'étendant axialement, lesquelles assurent, par l'intermédiaire d'une zone de guidage (2.1), un montage fixe en rotation et mobile axialement de l'au moins un disque d'induit (4) et permettent, par l'intermédiaire d'une zone de centrage (2.2) et par l'intermédiaire d'un point de liaison (12), une liaison fixe avec la plaque formant flasque (9),
dans lequel les pièces individuelles du frein à pression de ressort (BR) allant du support de bobine (1) jusqu'à la plaque formant flasque (9) sont placées, dans l'ordre mentionné, dans un dispositif qui est constitué d'une plaque de dispositif (V) et d'au moins un poinçon de pressage (S),
dans lequel soit le poinçon de pressage (S) presse toutes les parties du frein à pression de ressort (BR) les unes sur les autres en contact direct contre la plaque de dispositif (V), puis recule de manière commandée en éloignement de la dimension de l'entrefer (L) souhaité, et dans cette position, les lattes d'écartement (2) sont reliées à la plaque formant flasque (9) ou au support de bobine (1),
soit dans lequel le poinçon de pressage (S) presse toutes les parties du frein à pression de ressort (BR) les unes sur les autres avec des feuilles d'écartement (D) insérées entre elles en contact direct contre la plaque de dispositif (V), puis les lattes d'écartement (2) sont reliées à la plaque formant flasque (9) ou au support de bobine (1), et à la fin, les feuilles d'écartement (D) sont retirées du frein à pression de ressort (BR).

16. Procédé de fabrication selon la revendication 15, **caractérisé en ce que,** avant le début du procédé de fabrication, les lattes d'écartement (2) forment avec le support de bobine (1) une unité préfabriquée reliée de manière fixe, **et en ce qu'**une liaison entre les lattes d'écartement (2) et la plaque formant flasque (9) est fabriquée dans le dispositif pendant le procédé de fabrication.

17. Procédé de fabrication selon la revendication 15, **caractérisé en ce que,** avant le début du procédé de fabrication, les lattes d'écartement (2) forment avec la plaque formant flasque (9) une unité préfabriquée reliée de manière fixe, **et en ce qu'**une liaison entre les lattes d'écartement (2) et le support de bobine (1) est fabriquée dans le dispositif pendant le procédé de fabrication.

18. Procédé de fabrication selon l'une des revendications 16 ou 17, **caractérisé en ce que** la liaison entre les lattes d'écartement (2) et le support de bobine (1) et/ou entre les lattes d'écartement (2) et la plaque formant flasque (9) est fabriquée par un procédé de collage, de brasage, de vissage ou de soudage.

19. Procédé de fabrication selon la revendication 18, **caractérisé en ce que** la liaison entre les lattes d'écartement (2) et le support de bobine (1) et/ou entre les lattes d'écartement (2) et la plaque formant flasque (9) est fabriquée par un procédé de soudage au laser préférentiel.

20. Frein à pression de ressort (BR) selon au moins l'une des revendications 1 à 14 et procédé de fabrication selon l'une des revendications 15 à 19, **caractérisé en ce que** le frein à pression de ressort (BR) et en particulier le support de bobine (1) présentent un contour extérieur rond, de préférence un contour extérieur circulaire.

21. Frein à pression de ressort (BR) selon au moins l'une des revendications 1 à 14 et procédé de fabrication selon l'une des revendications 15 à 19, **caractérisé en ce que** le frein à pression de ressort (BR) et en particulier le support de bobine (1) présentent un contour extérieur rectangulaire, de préférence un contour extérieur carré.

22. Frein à pression de ressort (BR) selon au moins l'une des revendications 1 à 14 et procédé de fabrication selon l'une des revendications 15 à 19, **caractérisé en ce que** le frein à pression de ressort (BR) et en particulier le support de bobine (1) présentent un contour extérieur à plusieurs coins ou polygonal.
